# EUROPÄISCHE PATENTSCHRIFT

(11) **EP 2 510 260 B1**
(45) Veröffentlichungstag und Bekanntmachung des Hinweises auf die Patenterteilung: **09.10.2013**
(21) Anmeldenummer: 10784760.0
(22) Anmeldetag: 24.11.2010
(51) Int. Cl.: B60K 17/16, F16H 48/08, F16H 48/22, F16H 48/30, F16H 48/32

(54) **KRAFTFAHRZEUGGETRIEBE MIT REGELBAREM DIFFERENTIAL**
MOTOR VEHICLE TRANSMISSION HAVING A CONTROLLABLE DIFFERENTIAL
BOÎTE DE VITESSES D'UN VÉHICULE AUTOMOBILE AVEC UN DIFFÉRENTIEL RÉGLABLE

(30) Priorität: 09.12.2009 DE 102009047749
(43) Veröffentlichungstag der Anmeldung: 17.10.2012
(73) Patentinhaber: ZF Friedrichshafen AG, 88038 Friedrichshafen (DE)
(72) Erfinder: VAN DER HARDT ABERSON, Frederik Ernst Carel, 88131 Lindau (DE); MUELLER, Klaus, 88074 Meckenbeuren (DE); FIRZLAFF, Uwe, 88690 Uhldingen (DE)
(86) Internationale Anmeldenummer: PCT/EP2010/068075
(87) Internationale Veröffentlichungsnummer: WO 2011/069821

(56) Entgegenhaltungen:
- DE-A1- 3 829 701
- DE-B- 1 157 442
- US-A- 5 066 268
- US-A- 5 149 307
- US-A1- 2008 242 469

## Beschreibung

Die Erfindung betrifft ein Kraftfahrzeuggetriebe mit einer Hauptkammer, in welcher eine Rotation einer Eingangswelle übersetzt auf eine Hauptwelle übertragbar ist, die mit einem Gehäuse eines Differentialgetriebes in Verbindung steht, wobei über das Gehäuse zwei Abtriebsräder antreibbar und hierbei unterschiedliche Drehgeschwindigkeiten der Abtriebsräder durch Ausgleichselemente des Differentialgetriebes darstellbar sind und zwischen einem der zwei Abtriebsräder und dem Gehäuse eine kraftschlüssige Kupplung vorgesehen ist, die eine, mit dem Gehäuse in Verbindung stehende erste Seite und eine, mit dem jeweiligen Abtriebsrad verbundene zweite Seite aufweist, welche durch einen Druckaufbau in einer Betätigungskammer miteinander in Kontakt bringbar sind, um das jeweilige Abtriebsrad mit dem Gehäuse des Differentialgetriebes zu koppeln.

Bei Kraftfahrzeugen mit Brennkraftmaschinen kommen üblicherweise Getriebe zur Anwendung, um die durch die Brennkraftmaschine zur Verfügung gestellten Drehzahlen und Drehmomente in Abhängigkeit des jeweiligen Fahrbereichs in, für den Vortrieb des Kraftfahrzeuges geeignete Drehzahlen und Drehmomente zu übersetzen. Aus Fahrstabilitäts- und Traktionsgründen müssen diese übersetzten Drehzahlen und Drehmomente hierbei zumindest auf eine Achse des Kraftfahrzeuges übertragen werden, die zur Verfügung stehende Leistung muss also mindestens auf ein linkes und ein rechtes Treibrad verteilt werden. Die Verwendung einer gemeinsamen Antriebswelle für beide Treibräder würde jedoch die Problematik mit sich bringen, dass beim Durchfahren von Kurven eine Verspannung des Antriebsstrangs sowie ein hoher Verschleiß und Belastung der Räder auftreten würde, da das kurvenäußere Rad einen größeren Weg zurückzulegen hat als das kurveninnere. Aus diesem Grund wird üblicherweise zwischen dem Kraftfahrzeuggetriebe und Achswellen der Treibräder ein so genanntes Differentialgetriebe vorgesehen, welches einen zwangfreien Drehzahl- und Kräfteausgleich zwischen den Achswellen der Treibräder zulässt. Hierzu wird die von dem Kraftfahrzeuggetriebe kommende Leistung auf ein Gehäuse des Differentialgetriebes übertragen und durch dieses mit Hilfe von Ausgleichselementen auf zwei innerhalb des Gehäuses angeordnete Abtriebsräder aufgeteilt, welche jeweils mit den Achswellen in Verbindung stehen. Bei einer Geradeausfahrt des Kraftfahrzeuges laufen die Ausgleichselemente hierbei gemeinsam mit dem Gehäuse des Differentialgetriebes als Block um und verteilen die durch das Kraftfahrzeuggetriebe zur Verfügung gestellte Leistung gleichmäßig auf die beiden Abtriebsräder und somit Achswellen. Im Falle einer Kurvenfahrt des Kraftfahrzeuges wird hingegen eine Ausgleichsbewegung der Ausgleichselemente innerhalb des Gehäuses eingeleitet, um unterschiedliche Drehzahlen der beiden Abtriebswellen zu ermöglichen.

Die Wirkung des Differentialgetriebes hat allerdings bei unterschiedlichen Kraftschlusspotentialen der beiden Treibräder den entscheidenden Nachteil, dass die auf die Fahrbahn übertragbaren Vortriebskräfte von dem jeweils niedrigeren Kraftschlusspotential abhängig sind. Im Extremfall führt dies dazu, dass bei einem durchdrehenden Treibrad durch das jeweils andere Rad kein höheres Drehmoment übertragen werden kann als durch das durchdrehende, das Kraftfahrzeug also nicht oder in nur sehr geringem Maße angetrieben werden kann. Um diesen Nachteil zu beheben, werden üblicherweise im Bereich des Differentialgetriebes Sperrvorrichtungen vorgesehen, um eine Ausgleichsbewegung der Ausgleichselemente des Differentialgetriebes vollständig zu unterbinden oder zumindest zu behindern.

Aus der DE 38 29 701.A1 ist ein Differentialgetriebe bekannt, bei welchem über ein Gehäuse mittels innerhalb des Gehäuses vorgesehener Ausgleichselemente Abtriebsräder antreibbar sind, wobei unterschiedliche Drehgeschwindigkeiten der Abtriebsräder durch entsprechende Ausgleichsbewegungen der Ausgleichselemente darstellbar sind. Um die Wirkung des Differentialgetriebes in bestimmten Situationen gezielt überbrücken zu können, ist zwischen einem der Abtriebsräder und dem Gehäuse eine kraftschlüssige Kupplung vorgesehen, die bei Betätigung dieses Abtriebsrad direkt mit dem Gehäuse koppelt und dadurch für eine Drehzahlangleichung zwischen Gehäuse und Abtriebsrad sorgt. Eine starre Koppelung des Abtriebsrades mit dem Gehäuse bewirkt über die Ausgleichelemente ein Mitführen des jeweils anderen Abtriebsrades mit gleicher Drehzahl und erzwingt folglich eine gleichmäßige Aufteilung der Leistung auf beide Räder. Zur Betätigung der kraftschlüssigen Kupplung ist hierbei in deren Bereich eine Betätigungskammer vorgesehen, die durch einen Ruhe- und Arbeitsteil begrenzt wird und mit einer Hydraulikflüssigkeit gefüllt ist. Bei einem Druckaufbau in dieser Betätigungskammer wird das Arbeitsteil in Richtung der kraftschlüssigen Kupplung verschoben und überträgt diese Bewegung mittels zwischengeordneter Elemente auf eine der beiden Seiten der Kupplung, was deren Schließen bewirkt. Bei einer Verminderung des Drucks in der Betätigungskammer wird ein Öffnen der Kupplung durch eine Rückbewegung des Arbeitsteils mittels in diesem Bereich angeordneter Federelemente erreicht.

Es ist im Allgemeinen bekannt, dass ein derartiges Differentialgetriebe insbesondere bei frontgetriebenen Kraftfahrzeugen direkt in einer Hauptkammer des Kraftfahrzeuggetriebes angeordnet sein kann, wobei ein Antrieb des Gehäuses des Differentialgetriebes hierbei über eine Hauptwelle erfolgt. Eine Drehbewegung der Hauptwelle wird durch die übersetzte Übertragung einer Rotation einer ebenfalls in der Hauptkammer angeordneten Eingangswelle hervorgerufen.

Eine derartige Ausführung eines Kraftfahrzeuggetriebes hat jedoch den Nachteil, dass die zum Betätigen der kraftschlüssigen Kupplung des Differentialgetriebes vorgesehene Hydraulikflüssigkeit aufgrund von Leckage in die Hauptkammer des Kraftfahrzeuggetriebes gelangen kann und sich dabei mit dem dort befindlichen und hierzu unterschiedlichen Getriebeöl vermischt. Dieses Getriebeöl weist speziell auf die zwischen Antriebs- und Hauptwelle stattfindenden Schaltvorgänge zugeschnittene Eigenschaften auf, welche durch zunehmende Vermischung mit der Hydraulikflüssigkeit aus der Betätigungskammer nach und nach vermindert werden. Dies führt dazu, dass die Schaltqualität des Kraftfahrzeuggetriebes über dessen Einsatzdauer ebenfalls eine zunehmende Verschlechterung erfährt.

Es ist daher die Aufgabe der vorliegenden Erfindung, ein Kraftfahrzeuggetriebe mit einem integrierten Differentialgetriebe zur Verfügung zu stellen, wobei dieses Differentialgetriebe eine Kupplung zum Sperren der Differentialwirkung aufweist und dabei ein Vermischen einer zur Betätigung der Kupplung vorgesehenen Hydraulikflüssigkeit mit einem in der Hauptkammer befindlichen Getriebeöl wirksam verhindert wird.

Diese Aufgabe wird ausgehend vom Oberbegriff des Anspruchs 1 in Verbindung mit dessen kennzeichnenden Merkmalen gelöst. Die darauffolgenden, abhängigen Ansprüche geben jeweils vorteilhafte Weiterbildungen der Erfindung wieder.

Die Erfindung umfasst die technische Lehre, dass die Betätigungskammer vollständig abgetrennt von der Hauptkammer platziert ist, wobei im Bereich des Differentialgetriebes und zwischen Haupt- und Betätigungskammer eine undurchlässige Membran als Trennung vorgesehen ist, die bei einem Druckaufbau in der Betätigungskammer eine Formänderung erfährt und hierbei über eine Betätigungseinrichtung die Kupplung betätigt. Durch die vollständige Trennung von Betätigungs- und Hauptkammer kann eine Vermischung des Hydrauliköls mit dem Getriebeöl der Hauptkammer vollständig ausgeschlossen und folglich eine daraus resultierende Verschlechterung der Schaltqualität verhindert werden. Gleichzeitig kann mittels der Membran und der zwischengeschalteten Betätigungseinrichtung zuverlässig eine Ansteuerung der Kupplung zum Überbrücken der Wirkung des Differentialgetriebes bewerkstelligt werden.

Entsprechend einer Ausführungsform der Erfindung umfasst die Betätigungseinrichtung einen Kolben, welcher über ein Federelement gegen die der Betätigungskammer abgewandten Seite der Membran vorgespannt ist und die Formänderung der Membran in eine translatorische Bewegung zur Betätigung der Kupplung umsetzt. Durch die Verwendung eines Kolbens und das Vorspannen desselbigen gemeinsam mit der Membran, kann eine Formänderung der Membran sehr präzise in eine translatorische Bewegung zur Betätigung der Kupplung umgewandelt werden.

In Weiterbildung der Erfindung sind dem Kolben eine Lagerung, eine Druckscheibe und mehrere Druckbolzen nachgeschaltet, wobei letzere bei der translatorischen Bewegung des Kolbens durch Verschiebung mit, der Druckscheibe abgewandten Enden mit einer der beiden Seiten der Kupplung in Kontakt treten. Dies hat den Vorteil, dass durch eine derartige Anordnung die Betätigungskammer im Bereich des einen Abtriebsrades platziert werden kann, während die Kupplung im Bereich des anderen Abtriebsrades vorgesehen ist. Dies ermöglicht somit eine freiere Gestaltung in Bezug auf die Anordnung der einzelnen Bauteile bzw. Anpassung an bestehende Platzverhältnisse. Zudem können die Druckbolzen aufgrund der zwischen Kolben und ihnen platzierten Lagerung durch das Gehäuse des Differentialgetriebes hindurchgeführt und gemeinsam mit diesem rotierend platziert werden, was eine kompakte Ausführung ermöglicht. Mittels der Druckscheibe kann des Weiteren ein gleichmäßiges Andrücken der Druckbolzen an eine Seite der Kupplung bei einer translatorischen Bewegung des Kolbens erreicht werden.

Entsprechend einer weiteren Ausführungsform der Erfindung ist das Lager nach Art eines Axialnadellagers ausgebildet. Vorteilhafterweise kann hierdurch eine sehr kompaktbauende und zuverlässige Ausführung eines Axiallagers erreicht werden.

In Weiterbildung der Erfindung sind die Druckbolzen über Federn gegen die Druckscheibe vorgespannt. Dadurch bewegen sich die Druckbolzen bei einer Rückbewegung des Kolbens zuverlässig ebenfalls wieder in ihre Ausgangslage zurück, wodurch eine normale Betriebsweise des Differentialgetriebes sichergestellt wird.

Gemäß einer weiteren, vorteilhaften Ausführungsform der Erfindung ist das Federelement im Bereich des Kolbens nach Art einer Tellerfeder ausgebildet. Hierdurch kann in axialer Richtung eine sehr kompakte Vorspannung des Kolbens erreicht werden.

Es ist eine weitere Ausgestaltung der Erfindung, dass die Membran über Spannringe zwischen Haupt- und Betätigungskammer befestigt ist. Vorteilhafterweise wird die Membran hierdurch zuverlässig in Position gehalten und garantiert somit zum Einen eine zuverlässige Abtrennung der Hauptkammer von der Betätigungskammer und ermöglicht zum Anderen die Betätigung der Kupplung.

Vorteilhafterweise halten des Weiteren Sicherungsringe die Spannringe mittelbar oder unmittelbar in Position. Durch diese Maßnahme kann die Zuverlässigkeit des Systems weiter gesteigert werden.

Gemäß einer weiteren, vorteilhaften Ausführungsform der Erfindung ist die Kupplung nach Art einer Lamellenkupplung ausgebildet. Hierdurch kann entsprechend der Anzahl an Lamellen eine sehr kompakte Ausführung der Kupplung erreicht werden, während je nach Anpresskraft der Lamellen aneinander durch Ausbilden eines Schlupfes auch eine, nur bedingte Koppelung des Gehäuses mit dem Abtriebsrad darstellbar ist.

In Weiterbildung der Erfindung ist das Differentialgetriebe nach Art eines Kegelraddifferentials ausgebildet. Durch die Verwendung eines derartigen Differentialgetriebes kann eine kompakte Anordnung im Kraftfahrzeuggetriebe realisiert werden.

Es ist eine weitere Ausgestaltung der Erfindung, dass die Membran aus einem Polymermaterial besteht. Durch die Wahl eines derartigen Materials wird eine zuverlässige Funktionsweise der Membran auch über eine längere Einsatzzeit sichergestellt.

Weitere, die Erfindung verbessernde Maßnahmen werden nachstehend gemeinsam mit der Beschreibung einer bevorzugten Ausführungsform der Erfindung anhand der Figuren näher dargestellt.

Es zeigt:
- Fig.1: eine stark schematische Ansicht des erfindungsgemäßen Kraftfahrzeuggetriebes;
- Fig.2: eine perspektivische Detailansicht im Bereich eines Differentialgetriebes des erfindungsgemäßen Kraftfahrzeuggetriebes; und
- Fig.3: eine schematische Detailansicht im Bereich des Differentialgetriebes.

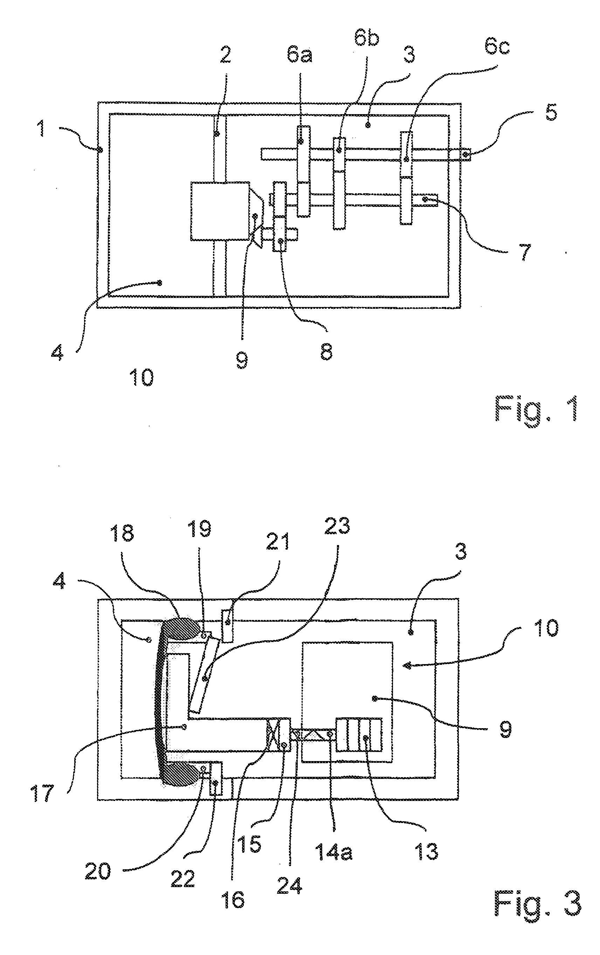

In Fig.1 ist eine stark schematische Ansicht des erfindungsgemäßen Kraftfahrzeuggetriebes zu sehen, in dessen Getriebegehäuse 1 durch eine Trennwand 2 eine Hauptkammer 3 und eine Betätigungskammer 4 definiert werden. In der Hauptkammer 3 ist dabei eine Eingangswelle 5 vorgesehen, die mit einem - hier nicht dargestellten - Motor in Verbindung steht und ihre Rotation mittels Wahl eines von mehreren Zahnradpaaren 6A-6C mit einem entsprechenden Übersetzungsverhältnis auf eine Hauptwelle 7 überträgt. Diese Hauptwelle 7 wiederum ist über einen Triebsatz 8 mit dem Gehäuse 9 eines Differentialgetriebes 10 verbunden, wobei dieser Bereich in Fig.1 lediglich als Blackbox dargestellt ist.

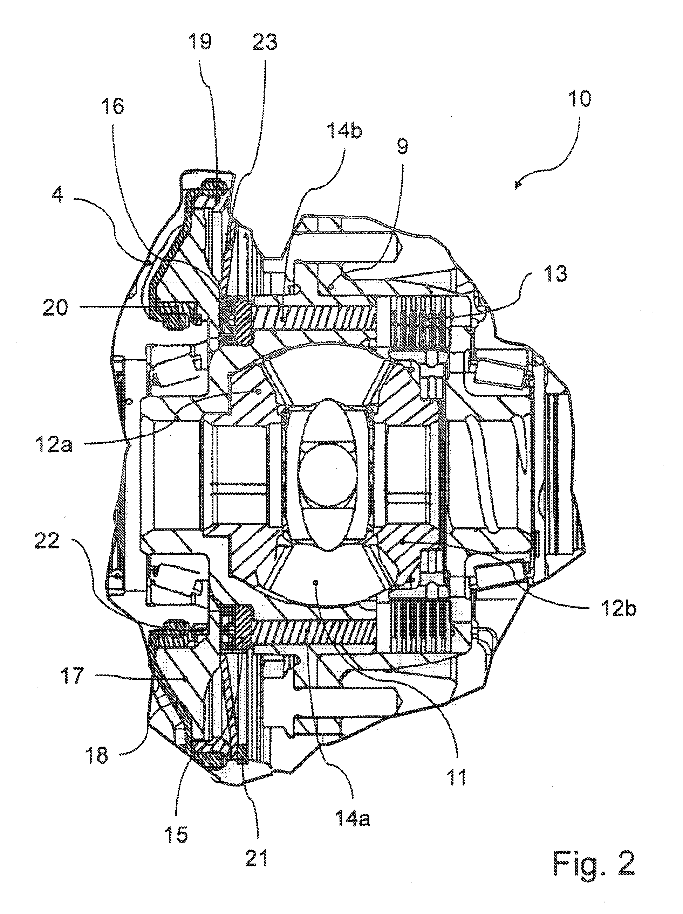

In Fig.2 ist der Bereich des Differentialgetriebes 10 als Schnittansicht näher dargestellt. Hieraus ist ersichtlich, dass das Gehäuse 9 des als Kegelraddifferential ausgebildeten Differentialgetriebes 10 in seinem Innenraum über Ausgleichselemente 11 verfügt, über die bei Rotation des Gehäuses 9 die Drehbewegung auf zwei Abtriebsräder 12A und 12B übertragen wird. Durch eine Ausgleichsbewegung der Ausgleichselemente 11 können dabei auf dem Fachmann bekannte Art und Weise unterschiedliche Drehgeschwindigkeiten zwischen den beiden Abtriebsräder 12A und 12B dargestellt werden. Um diese allerdings in bestimmten Fahrsituationen gezielt zu unterbinden, ist zwischen dem Abtriebsrad 12B und dem Gehäuse 9 eine Kupplung 13 platziert, deren erste Seite mit dem Gehäuse 9 und deren zweite Seite mit dem Abtriebsrad 12B verbunden ist. Eine Betätigung dieser Kupplung 13 führt zu einer Koppelung des Abtriebsrades 12B mit Gehäuse 9, wodurch beide Elemente mit gleicher Drehgeschwindigkeit rotieren, wobei Abtriebsrad 12A als Folge dessen über die Ausgleichselemente 11 ebenfalls mit gleicher Drehgeschwindigkeit mit bewegt wird und dementsprechend insgesamt die Differentialwirkung des Differentialgetriebes 10 überbrückt wird. Eine Betätigung der Kupplung 13 wird nun eingeleitet, indem Druckbolzen 14A und 14B mittels einer Druckscheibe 15 sowie einer Lagerung 16 durch eine translatorische Bewegung eines Kolbens 17 axial in Richtung der Kupplung 13 verschoben werden und über ihre Enden einen Anpressdruck auf eine der Seiten der Kupplung 13 ausüben. Hierbei rotieren die Druckbolzen 14A und 14B gemeinsam mit dem Gehäuse 9, wobei die Relativbewegung zum Kolben 17 durch die Lagerung 16 ermöglicht wird. Die translatorische Bewegung des Kolbens 17 wird durch einen gezielten Druckaufbau in der Betätigungskammer 4 durch Hydraulikflüssigkeit hervorgerufen. Um allerdings die Betätigungskammer 4 hierbei vollständig abzutrennen und ein Entweichen von Hydraulikflüssigkeit aus der Betätigungskammer 4 zu verhindern, ist zwischen Kolben 17 und Betätigungskammer 4 eine Membran 18 vorgesehen, die bei Druckaufbau in der Betätigungskammer 4 eine Formänderung erfährt und dadurch den Kolben 17 in translatorischer Richtung verschiebt. Zur Sicherung der Membran 18 ist diese über einen äußeren Spannring 19 sowie einen inneren Spannring 20 befestigt, wobei beide Spannringe 19 und 20 jeweils über Sicherungsringe 21 und 22 in Position gehalten werden. Des Weiteren ist zwischen dem Sicherungsring 21 und dem äußeren Spannring 19 eine Tellerfeder 23 platziert, welche den Kolben 17 gegen die Membran 18 vorspannt.

Zur besseren Nachvollziehbarkeit des Systems, ist in Fig.3 des Weiteren eine stark schematische Ansicht des Bereichs aus Fig.2 dargestellt. Aus dieser Ansicht ist ferner zu erkennen, dass im Bereich eines Druckbolzens 14A jeweils eine Feder 24 vorgesehen ist, die den zugehörigen Druckbolzen 14A gegen die Druckscheibe 15 vorspannt und dementsprechend bei einem abfallenden Druck in Betätigungskammer 4 für ein Öffnen der Kupplung 13 sorgt.

Durch die erfindungsgemäße Ausgestaltung eines Kraftfahrzeuggetriebes ist es dementsprechend möglich, ein Differentialgetriebe 10 mit einer Sperrvorrichtung in Form einer Kupplung 13 in die Hauptkammer 3 zu integrieren und gleichzeitig ein Vermischen der Hydraulikflüssigkeit aus Betätigungskammer 4 mit dem in Hauptkammer 3 befindlichen Getriebeöl zu verhindern.

### Bezugszeichen

- 1: Getriebegehäuse
- 2: Trennwand
- 3: Hauptkammer
- 4: Betätigungskammer
- 5: Eingangswelle
- 6A-6C: Zahnradpaare
- 7: Hauptwelle
- 8: Triebsatz
- 9: Gehäuse
- 10: Differentialgetriebe
- 11: Ausgleichselemente
- 12A, 12B: Abtriebsräder
- 13: Kupplung
- 14A, 14B: Druckbolzen
- 15: Druckscheibe
- 16: Lagerung
- 17: Kolben
- 18: Membran
- 19: äußerer Spannring
- 20: innerer Spannring
- 21, 22: Sicherungsringe
- 23: Tellerfeder
- 24: Feder

## Patentansprüche

1. Kraftfahrzeuggetriebe mit einer Hauptkammer (3), in welcher eine Rotation einer Eingangswelle (5) übersetzt auf eine Hauptwelle (7) übertragbar ist, die mit einem Gehäuse (9) eines Differentialgetriebes (10) in Verbindung steht, wobei über das Gehäuse (9) zwei Abtriebsräder (12A, 12B) antreibbar und hierbei unterschiedliche Drehgeschwindigkeiten der Abtriebsräder (12A, 12B) durch Ausgleichselemente (11) des Differentialgetriebes (10) darstellbar sind und zwischen einem der zwei Abtriebsräder (12A ,12B) und dem Gehäuse (9) eine Kupplung (13) vorgesehen ist, die eine, mit dem Gehäuse (9) in Verbindung stehende erste Seite und eine, mit dem jeweiligen Abtriebsrad (12B) verbundene zweite Seite aufweist, welche durch einen Druckaufbau in einer Betätigungskammer (4) miteinander in Kontakt bringbar sind, um das jeweilige Abtriebsrad (12B) mit dem Gehäuse (9) des Differentialgetriebes (10) zu koppeln, **dadurch gekennzeichnet, dass** die Betätigungskammer (4) vollständig abgetrennt von der Hauptkammer (3) platziert ist, wobei im Bereich des Differentialgetriebes (10) und zwischen Haupt- (3) und Betätigungskammer (4) eine undurchlässige Membran (18) als Trennung vorgesehen ist, die bei dem Druckaufbau in der Betätigungskammer (4) eine Formänderung erfährt und hierbei über eine Betätigungseinrichtung die Kupplung (13) betätigt.

2. Kraftfahrzeuggetriebe nach Anspruch 1, **dadurch gekennzeichnet, dass** die Betätigungseinrichtung einen Kolben (17) umfasst, welcher über ein Federelement gegen die der Betätigungskammer (4) abgewandten Seite der Membran (18) vorgespannt ist und die Formänderung der Membran (18) in eine translatorische Bewegung zur Betätigung der Kupplung (13) umsetzt.

3. Kraftfahrzeuggetriebe nach Anspruch 2, **dadurch gekennzeichnet, dass** dem Kolben (17) eine Lagerung (16), eine Druckscheibe (15) und mehrere Druckbolzen (14A, 14B) nachgeschaltet sind, wobei letztere bei der translatorischen Bewegung des Kolbens (17) durch Verschiebung mit, der Druckscheibe (15) abgewandten Enden mit einer der beiden Seiten der Kupplung (13) in Kontakt treten.

4. Kraftfahrzeuggetriebe nach Anspruch 3, **dadurch gekennzeichnet, dass** die Lagerung (16) nach Art eines Axialnadellagers ausgebildet ist.

5. Kraftfahrzeuggetriebe nach Anspruch 3 oder 4, **dadurch gekennzeichnet, dass** die Druckbolzen (14A, 14B) über Federn (24) gegen die Druckscheibe (15) vorgespannt sind.

6. Kraftfahrzeuggetriebe nach einem der Ansprüche 2 bis 5, **dadurch gekennzeichnet, dass** das Federelement im Bereich des Kolbens (17) nach Art einer Tellerfeder (23) ausgebildet ist.

7. Kraftfahrzeuggetriebe nach einem der vorhergehenden Ansprüche, **dadurch gekennzeichnet, dass** die Membran (18) über Spannringe (19, 20) zwischen Haupt- (3) und Betätigungskammer (4) befestigt ist.

8. Kraftfahrzeuggetriebe nach Anspruch 6, **dadurch gekennzeichnet, dass** Sicherungsringe (21, 22) die Spannringe (19, 20) mittelbar oder unmittelbar in Position halten.

9. Kraftfahrzeuggetriebe nach einem der vorhergehenden Ansprüche, **dadurch gekennzeichnet, dass** die Kupplung (13) nach Art einer Lamellenkupplung ausgebildet ist.

10. Kraftfahrzeuggetriebe nach einem der vorhergehenden Ansprüche, **dadurch gekennzeichnet, dass** das Differentialgetriebe (10) nach Art eines Kegelraddifferentials ausgebildet ist.

11. Kraftfahrzeuggetriebe nach einem der vorhergehenden Ansprüche, **dadurch gekennzeichnet, dass** die Membran (18) aus einem Polymermaterial besteht.

## Claims

1. Motor-vehicle transmission having a main chamber (3), in which a rotation of an input shaft (5) can be transmitted in a stepped-up manner to a main shaft (7) which is connected to a housing (9) of a differential gear mechanism (10), it being possible for two output gears (12A, 12B) to be driven via the housing (9) and it being possible here for different rotational speeds of the output gears (12A, 12B) to be produced by compensation elements (11) of the differential gear mechanism (10), and a clutch (13) being provided between one of the two output gears (12A, 12B) and the housing (9), which clutch (13) has a first side which is connected to the housing (9) and a second side which is connected to the respective output gear (12B), which first side and second side can be brought into contact with one another by way of a pressure build-up in an actuating chamber (4), in order to couple the respective output gear (12B) to the housing (9) of the differential gear mechanism (10), **characterized in that** the actuating chamber (4) is positioned completely separately from the main chamber (3), an impermeable diaphragm (18) being provided as separating means in the region of the differential gear mechanism (10) and between the main chamber (3) and the actuating chamber (4), which diaphragm (18) experiences a shape change during the pressure build-up in the actuating chamber (4) and in the process actuates the clutch (13) via an actuating device.

2. Motor-vehicle transmission according to Claim 1, **characterized in that** the actuating device comprises a piston (17) which is prestressed via a spring element against that side of the diaphragm (18) which faces away from the actuating chamber (4) and converts the shape change of the diaphragm (18) into a translatory movement for actuating the clutch (13).

3. Motor-vehicle transmission according to Claim 2, **characterized in that** a mounting (16), a pressure disc (15) and a plurality of pressure bolts (14A, 14B) are connected downstream of the piston (17), the said pressure bolts (14A, 14B), during the translatory movement of the piston (17), coming into contact with one of the two sides of the clutch (13) by displacement by way of ends which face away from the pressure disc (15).

4. Motor-vehicle transmission according to Claim 3, **characterized in that** the mounting (16) is configured in the manner of an axial needle bearing.

5. Motor-vehicle transmission according to Claim 3 or 4, **characterized in that** the pressure bolts (14A, 14B) are prestressed against the pressure disc (15) via springs (24).

6. Motor-vehicle transmission according to one of Claims 2 to 5, **characterized in that** the spring element is configured in the region of the piston (17) in the manner of a disc spring (23).

7. Motor-vehicle transmission according to one of the preceding claims, **characterized in that** the diaphragm (18) is fastened via clamping rings (19, 20) between the main chamber (3) and the actuating chamber (4).

8. Motor-vehicle transmission according to Claim 6, **characterized in that** securing rings (21, 22) hold the clamping rings (19, 20) in position indirectly or directly.

9. Motor-vehicle transmission according to one of the preceding claims, **characterized in that** the clutch (13) is configured in the manner of a multiple disc clutch.

10. Motor-vehicle transmission according to one of the preceding claims, **characterized in that** the differential gear mechanism (10) is configured in the manner of a bevel gear differential.

11. Motor-vehicle transmission according to one of the preceding claims, **characterized in that** the diaphragm (18) is composed of a polymer material.

## Revendications

1. Boîte de vitesses d'un véhicule automobile comprenant une chambre principale (3) dans laquelle une rotation d'un arbre d'entrée (5) peut être transmise de manière démultipliée à un arbre principal (7) qui est en liaison avec un carter (9) d'un différentiel (10), deux roues de sortie (12A, 12B) pouvant être entraînées par le biais du carter (9) et des vitesses de rotation différentes des roues de sortie (12A, 12B) pouvant ainsi être réalisées par des éléments de compensation (11) du différentiel (10) et entre l'une des deux roues de sortie (12A, 12B) et le carter (9) étant prévu un embrayage (13) qui présente un premier côté en liaison avec le carter (9) et un deuxième côté en liaison avec la roue de sortie respective (12B), lesquels peuvent être amenés en contact l'un avec l'autre par une augmentation de pression dans une chambre d'actionnement (4), afin d'accoupler la roue de sortie respective (12B) au carter (9) du différentiel (10), **caractérisée en ce que** la chambre d'actionnement (4) est placée de manière complètement séparée de la chambre principale (3), une membrane imperméable (18) étant prévue en tant que séparation dans la région du différentiel (10) et entre la chambre principale (3) et la chambre d'actionnement (4), laquelle membrane subit une déformation lors de l'augmentation de pression dans la chambre d'actionnement (4) et actionne ainsi l'embrayage (13) par le biais d'un dispositif d'actionnement.

2. Boîte de vitesses d'un véhicule automobile selon la revendication 1, **caractérisée en ce que** le dispositif d'actionnement comprend un piston (17) qui est précontraint par le biais d'un élément de ressort contre le côté de la membrane (18) opposé à la chambre d'actionnement (4), et convertit la déformation de la membrane (18) en un mouvement de translation pour l'actionnement de l'embrayage (13).

3. Boîte de vitesses d'un véhicule automobile selon la revendication 2, **caractérisée en ce qu'**en aval du piston (17) sont montés un support sur palier (16), un disque de poussée (15) et plusieurs boulons-poussoirs (14A, 14B), ces derniers, lors du mouvement de translation du piston (17), venant en contact par coulissement, par les extrémités opposées au disque de poussée (15), avec l'un des deux côtés de l'embrayage (13).

4. Boîte de vitesses d'un véhicule automobile selon la revendication 3, **caractérisée en ce que** le support sur palier (16) est réalisé à la manière d'un palier à aiguilles axial.

5. Boîte de vitesses d'un véhicule automobile selon la revendication 3 ou 4, **caractérisée en ce que** les boulons-poussoirs (14A, 14B) sont précontraints par le biais de ressorts (24) contre le disque de poussée (15).

6. Boîte de vitesses d'un véhicule automobile selon l'une quelconque des revendications 2 à 5, **caractérisée en ce que** l'élément de ressort est réalisé dans la région du piston (17) à la manière d'un ressort Belleville (23).

7. Boîte de vitesses d'un véhicule automobile selon l'une quelconque des revendications précédentes, **caractérisée en ce que** la membrane (18) est fixée entre la chambre principale (3) et la chambre d'actionnement (4) par le biais de bagues de serrage (19, 20).

8. Boîte de vitesses d'un véhicule automobile selon la revendication 6, **caractérisée en ce que** des bagues de fixation (21, 22) maintiennent en position les bagues de serrage (19, 20) de manière directe ou indirecte.

9. Boîte de vitesses d'un véhicule automobile selon l'une quelconque des revendications précédentes, **caractérisée en ce que** l'embrayage (13) est réalisé à la manière d'un embrayage à disques.

10. Boîte de vitesses d'un véhicule automobile selon l'une quelconque des revendications précédentes, **caractérisée en ce que** le différentiel (10) est réalisé à la manière d'un différentiel à pignons coniques.

11. Boîte de vitesses d'un véhicule automobile selon l'une quelconque des revendications précédentes, **caractérisée en ce que** la membrane (18) se compose d'un matériau polymère.
